# EUROPEAN PATENT APPLICATION

(11) **EP 1 403 844 A2**
(43) Date of publication of application: **31.03.2004**
(21) Application number: 03255851.2
(22) Date of filing: 18.09.2003
(51) Int. Cl.: G09G 5/00

(54) **Display device with input signal checking**

(30) Priority: 19.09.2002 KR 2002057321
(71) Applicant: SAMSUNG ELECTRONICS CO., LTD., Suwon-City, Kyungki-do (KR)
(72) Inventor: Kim, Young-chan, Gyeonggi-do (KR); Chang, Jae-hyung, Seongnam-si Gyeonggi-do (KR)
(74) Representative: Geary, Stuart Lloyd

(57) **Abstract**

A displaying device and a method of checking signals input to a displaying device. The displaying device includes a signal identifying unit, a signal checking unit, and a signal changing unit. The signal identifying unit receives an input signal and identifies the type of input signal that is received. The signal checking unit checks whether the identified input signal is abnormal. The signal changing unit switches from the checked input signal to a next input signal to be checked so that the signal checking unit can check whether the next input signal is abnormal, after the signal checking unit checks whether the input signal is abnormal. Accordingly, when a displaying device goes to an abnormal mode, one of input signals can be checked in the displaying device to automatically change to another signal according to the order of checking the signals, the time required to check the signals, and the number of times the signals are checked without manipulating an additional key.

## Description

The present invention relates to display device comprising a display unit and a plurality of different video signal inputs.

Conventional display devices respond to an abnormal input signal by entering a safe mode and displaying a warning message to the user. In this situation, if the user desires to check another input signal, the user must press a button to select another input type. This may need to be done a number of times. Thus, it takes a large amount of time to change between signal types and the user has keep pressing the signal change button.

A display device according to the present invention is characterised by test means configured for automatically sequentially testing for the presence of appropriate signals at video inputs.

Preferably, the test means is configured to terminate said testing and output a screen controlling signal to the display unit in the event of the presence of an appropriate signal being detected.

The display device preferably includes user input means. Preferably, the test means is responsive to signals from the user input means to set a maximum number of tests for each video input tested and/or the duration of each test. More preferably, the test parameters can be set individually for each input being tested. The test means may be responsive to signals from the user input means to select the video inputs to be tested from said plurality of inputs. Thus, if a user does not have any equipment that outputs DVI digital signal, the user can prevent checking of a digital DVI input.

Preferably, the test means comprises:
input selecting means for sequentially selecting said video input;
means for determining an expected signal type in dependence on the video input currently selected by the input selecting means; and
means for determining whether a signal from the currently selected port has the characteristics of the signal type determined to be expected by the means for determining an expected signal type.

An embodiment of the present invention will now be described, by way of example, with reference to the accompanying drawings, in which:
Figure 1 is a block diagram of a display device according to the present invention;
Figure 2 is a flowchart illustrating a method of checking a signal input to a display device according to the present invention;
Figure 3 shows the screen of a display device, according to the present invention, when the input signal is not abnormal;
Figure 4 shows the screen of a display device, according to the present invention, when the input signal is abnormal;
Figure 5 shows a menu screen for setting the order in which input signals are checked in a display device according to the present invention; and
Figure 6 is a flowchart illustrating a method of changing the current signal input of a display device according to the present invention.

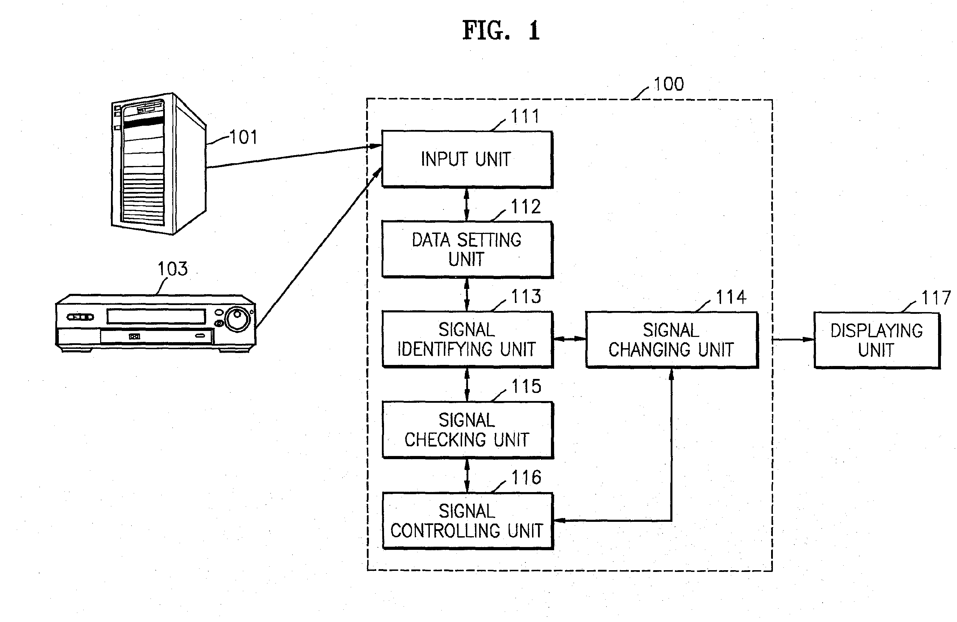

Referring to Figure 1, an input unit 111 receives signals from a computer 101, a digital versatile data (DVD) player 103, a television (TV) set (not shown), a VCR (not shown), or the like. The input unit 111 includes a plurality of ports, which are used respectively to receive a PC analogue video signal, a PC digital video signal, a TV signal, a VIDEO signal, an S-VIDEO signal and a digital TV (DTV) signal.

The user inputs data specifying the number of times signals are checked for, the time required to check for the signals and the order in which the ports are checked for the signals, using a menu displayed on the screen of the displaying unit 117 and buttons provided on the display device or a remote controller. A data setting unit 112 receives the specifying data and sets up the checking in accordance with the specifying data. A signal identifying unit 113 identifies the signals, if any, at the ports e.g. a D-sub analogue signal, a DVI analogue signal, a DVI digital signal or a VIDEO signal. In other words, since a display device 100 includes analogue and digital ports, the signal identifying unit 113 identifies signals form the ports at which they are received. A signal changing unit 114 sequentially selects the ports for checking. A signal checking unit 115 determines whether the signal on the currently selected port is abnormal. Thus, signals set as objects to be checked to determine if they are abnormal are checked according to the checking order set by the data setting unit 112.

After the signal identifying unit 113 has identified the types of signals, the signal checking unit 115 checks whether the signals are abnormal by decoding the signals or by checking whether signal cables are connected to the display device 100. For example, the signal checking unit 115 can check whether H and V signals are abnormal according to a sync processor's determination and check whether a VIDEO signal or a TV signal output from a decoder decoding a VIDEO or TV signal is abnormal. If a checked signal is abnormal, a signal controlling unit 116 checks the number of times the signals were checked, the time required to check the signals or the order of checking the signals . The signal controlling unit 116 then selects one of the signals to be checked following the currently checked signal, and sets conditions for the selected signal comprising data on the input port corresponding thereto. The displaying unit 117 displays input signals and the data set by the data setting unit 112.

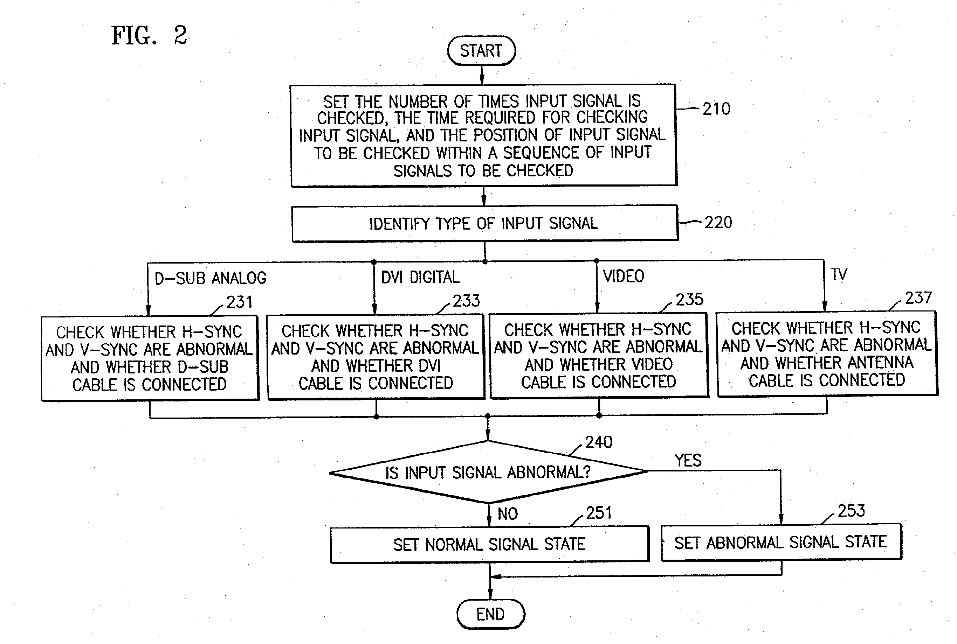

Referring to Figure 2, in operation 210, the user specifies the number of times signals input from the computer 101, the DVD player 103, a TV or a VCR are to be checked, the time required to check the signals, the order in which they are to be checked, while viewing the screen of the displaying unit 117 and the data specified by the user is set by the setting unit 112.

When signals are input from the computer 101, the DVD player 103, the TV, or the VCR, in operation 220, the signal identifying unit 113 identifies the input signal types from the ports on which they are input. When the input signal types have been identified, the signal checking unit 115 checks whether the signals are abnormal by decoding the signals or by checking whether signal cables are connected to the display device 100. In other words, in operation 231, the signal checking unit 115 checks whether H-sync and V-sync patterns of a D-sub analogue signal are abnormal, e.g. whether one of the H-sync and V-sync patterns are not input or one of the input H-sync and V-sync patterns is abnormal, and whether a D-sub cable is connected to check whether the D-sub signal is abnormal. In operation 233, the signal checking unit 115 checks whether H-sync and V-sync patterns of a digital visual interface (DVI) digital signal are abnormal and whether a DVI cable is connected to check whether the DVI digital signal is abnormal. In operation 235, the signal checking unit 115 checks whether H-sync and V-sync patterns of a VIDEO signal are abnormal and whether a VIDEO cable is connected to check whether the VIDEO signal is abnormal. In operation 237, the signal checking unit 115 checks whether H-sync and V-sync patterns of a TV signal are abnormal and whether an antenna cable is connected to check whether the TV signal is abnormal.

The signal changing unit 114 checks the number of times the D-sub analogue signal, the DVI digital signal, the VIDEO signal, and the TV signal are checked, the time required to check the D-sub analogue signal, the DVI digital signal, the VIDEO signal, and the TV signal, and the order of checking the D-sub analogue signal, the DVI digital signal, the VIDEO signal and the TV signal. Also, the signal changing unit 114 converts the D-sub analogue signal, the DVI digital signal, the VIDEO signal, and the TV signal, into a form in which the D-sub analogue signal, the DVI digital signal, the VIDEO signal, and the TV signal can be checked.

In operation 240, the signal checking unit 115 checks whether the signal is abnormal. If the signal is normal, in operation 251, the signal is noted as being in a normal signal state. If the signal is abnormal, in operation 253, the signal is noted as being in an abnormal signal state. If an input signal is noted as being in a normal state, the input signal continues being displayed. If the input signal is noted as being in an abnormal state, the input signal stops being displayed.

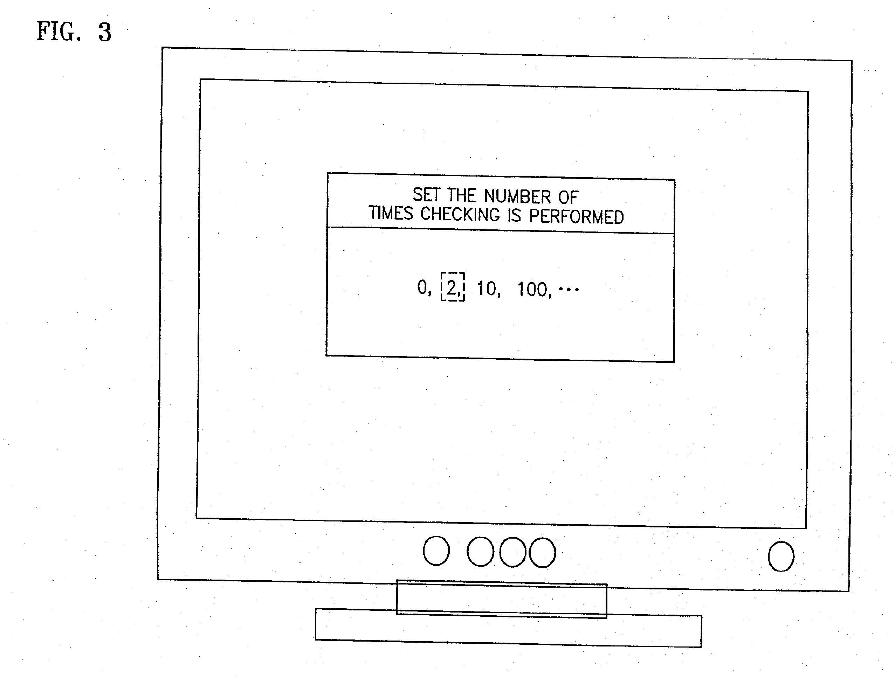

Referring to Figure 3, the user can set the number of times the signals are to be checked by means of a setting screen, displayed by the displaying unit 117. In the present example, the user has set the number of checks to two.

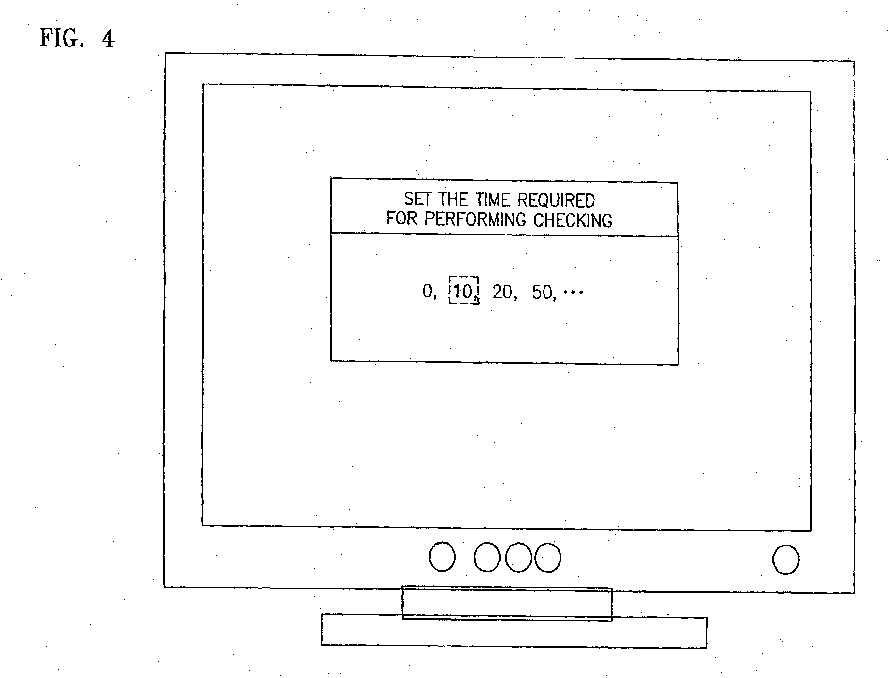

Referring to Figure 4, the user can set the time required to check each signal by means of a screen, displayed by the displaying unit 117. In the present example, the time required to check the signals is set to be 10 seconds.

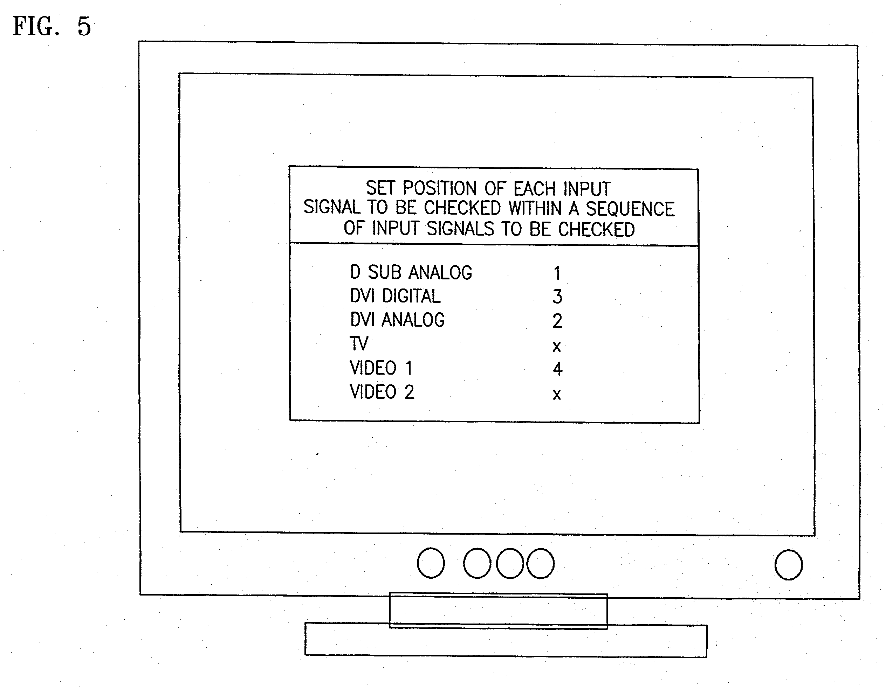

Referring to Figure 5, the user can determine which signal input to the display device 100 is to be checked and which signal is to be checked first using a menu displayed on the screen of the displaying unit 117. In the illustrated example, the checking is set to be performed in the order D-sub analogue signal, DVI analogue signal, DVI digital signal and VIDEO 1 signal. TV signal and VIDEO 2 signal are set not to be checked.

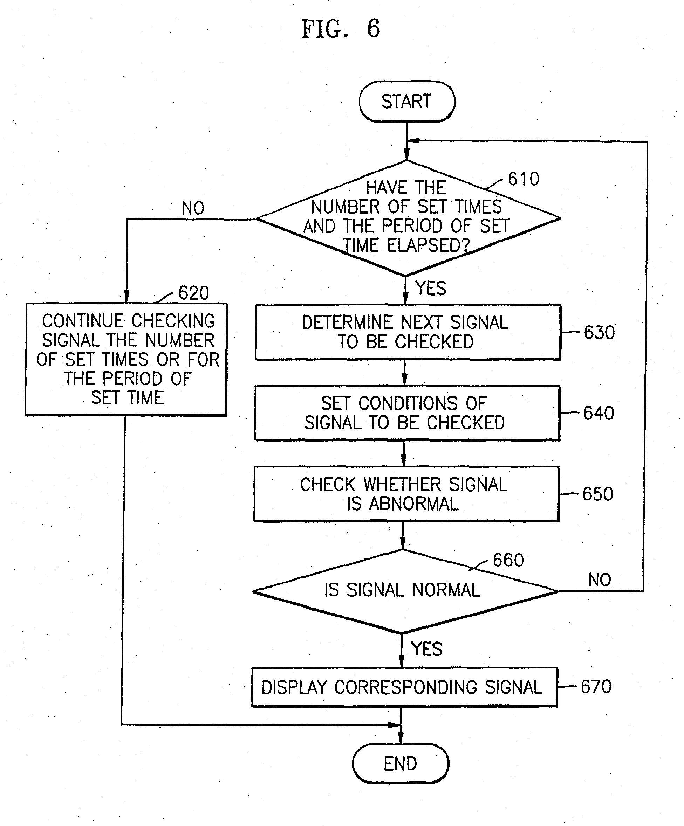

The checking process will now be described with reference to Figure 6.

Referring to Figure 6, in operation 610, the signal controlling unit 116 determines whether the number of times the currently selected signal has been checked exceeds the number of times set by the user and whether the signal checking time set by the user has elapsed. If, in operation 610, the signal controlling unit 116 determines that the number of times the currently selected signal has been checked does not exceed the number of times set by the user or the signal checking time has not elapsed, the signal checking unit 115 continues checking the currently selected signal, in operation 620. If, in operation 610, the signal controlling unit 116 determines that the number of times the currently selected signal has been checked exceeds the number of times set by the user and the signal checking time has elapsed, the signal controlling unit 116 determines the next signal to be checked according to the signal checking order, in operation 630, and, in operation 640, sets the conditions of the next signal. The signal changing unit 114, in operation 650, then initiates checking whether the next signal is abnormal. The signal checking unit 115 checks whether the determined signal is normal or abnormal in operation 660. If in operation 660, it is determined that the checked signal is normal, the signal is displayed by the displaying unit 117, in operation 670. If, in operation 660, the checked signal is not normal, the process returns to operation 610 and the process is repeated.

As is described above, according to an embodiment of the present invention, if a signal displayed on a display device 100 is abnormal, a checking process moves to a next signal to check the next signal, so that input signals are checked according to the checking order, the checking time, or the checking number of times preset by a user. Thus, a user can change a currently displayed signal to another signal without changing signals using a signal changing key and without manipulating an additional key. Of course, in an alternate embodiment of the present invention, the currently displayed signal may be changed to another signal automatically. As a result, signals can be quickly changed and the user can conveniently change signals.

While the present invention has been particularly shown and described with reference to an exemplary embodiment thereof, it will be understood by those of ordinary skill in the art that various changes in form and details may be made.

## Claims

1. A display device comprising a display unit (117) and a plurality of different video signal inputs (111), **characterised by** test means (113, 114, 115, 116) configured for automatically sequentially testing for the presence of appropriate signals at video inputs.

2. A display device according to claim 1, wherein the test means (113, 114, 115, 116) is configured to terminate said testing and output a screen controlling signal to the display unit (117) in the event of the presence of an appropriate signal being detected.

3. A display device according to claim 1 or 2, including user input means, wherein the test means (113, 114, 115, 116) is responsive to signals from the user input means to set a maximum number of tests for each video input tested and/or the duration of each test.

4. A display device according to claim 3, wherein the test means (113, 114, 115, 116) is responsive to signals from the user input means to set a maximum number of tests for each video input tested individually and/or the duration of each test individually.

5. A display device according to any preceding claims, including user input means, wherein the test means (113, 114, 115, 116) is responsive to signals from the user input means to select the video inputs to be tested from said plurality of inputs (111).

6. A display device according to any preceding claim, wherein the test means (113, 114, 115, 116) comprises:
input selecting means (114, 116) for sequentially selecting said video input (111);
means (113) for determining an expected signal type in dependence on the video input (111) currently selected by the input selecting means (114, 116); and
means (115) for determining whether a signal from the currently selected port has the characteristics of the signal type determined to be expected by the means (113) for determining an expected signal type.

7. A displaying device comprising:
a signal identifying unit that receives an input signal and identifies the type of the input signal ;
a signal checking unit that checks whether the identified input signal is abnormal; and
a signal changing unit that switches from the checked input signal to a next input signal to be checked so that the signal checking unit checks whether the next input signal is abnormal, after the signal checking unit checks whether the identified input signal is abnormal.

8. The displaying device of claim 7, wherein the signal identifying unit identifies whether the received input signal is one of a D-sub analog signal, a DVI analog signal, a DVI digital signal, and a VIDEO signal.

9. The displaying device of claim 7, wherein the signal checking unit checks whether the identified input signal is abnormal by one of decoding the identified input signal and sensing whether an input signal cable is connected to the displaying device.

10. The displaying device of claim 7, further comprising a data setting unit that sets one of a number of times the identified input signal is checked, a time required to check the identified input signal, and a position of the identified input signal to be checked within a sequence of identified input signals to be checked,
wherein if the signal checking unit has not checked one of the number of set times whether the identified input signal is abnormal and has not checked for the period of set time whether the identified input signal is abnormal, the signal checking unit continues checking whether the identified input signal is abnormal.

11. The displaying device of claim 10, further comprising a signal controlling unit that checks the position of the checked input signal within the sequence of identified input signals to be checked to determine which identified input signal is to be checked after the checked input signal,
wherein the signal changing unit switches from the checked input signal to the determined input signal so that the signal checking unit checks whether the determined input signal is abnormal.

12. A method of checking a signal input into a displaying device, the method comprising:
receiving the input signal and identifying a type of the input signal that is received;
checking whether the identified input signal is abnormal; and
switching from the checked input signal to a next input signal to be checked so that whether the next input signal is abnormal is checked, after the input signal is checked and found to be abnormal.

13. The method of claim 12 wherein the identifying comprises determining whether the input signal is one of a D-sub analog signal, a DVI analog signal, a DVI digital signal, and a VIDEO signal.

14. The method of claim 12, wherein the checking comprises determining whether the input signal is abnormal by at least one of decoding the input signal and sensing whether an input signal cable is connected to the displaying device.

15. The method of claim 12, wherein the checking comprises setting one of a number of times the identified input signal is checked, a time required to check the identified input signal, and a position of the identified input signal to be checked within a sequence of identified input signals to be checked,
wherein if the checking whether the identified input signal is abnormal has not been performed one of the number of set times and checking whether the identified input signal is abnormal has not been performed for the period of set time, checking whether the identified input signal is abnormal continues.

16. The method of claim 15, wherein the checking further comprises checking the position of the checked input signal within the sequence of identified input signals to be checked to determine which identified input signal is to be checked after the checked input signal,
wherein the checked input signal is switched to the determined input signal so that whether the determined input signal is abnormal is checked.

17. A displaying device comprising:
a signal identifying unit receiving an input signal and identifying the type of received input signal;
a signal checking unit checking whether the identified input signal is abnormal; and
a signal changing unit switching from the checked input signal to check a next input signal so that the signal checking unit checks whether the next input signal is abnormal.

18. The displaying device of claim 17, wherein the identified input signal and the next input signal are abnormal if cables carrying the signals are not connected to the displaying device.

19. The displaying device of claim 17, wherein the identified input signal and the next input signal are abnormal if H-sync and V-sync patterns associated with the signals are abnormal.

20. The displaying device of claim 17, wherein the signal identifying unit identifies whether the received input signal is a D-sub analog signal.

21. The displaying device of claim 17, wherein the signal identifying unit identifies whether the received input signal is a DVI analog signal.

22. The displaying device of claim 17, wherein the signal identifying unit identifies whether the received input signal is a DVI digital signal.

23. The displaying device of claim 17, wherein the signal identifying unit identifies whether the received input signal is a VIDEO signal.

24. The displaying device of claim 17, wherein the signal checking unit checks whether the identified input signal is abnormal by decoding the identified input signal.

25. The displaying device of claim 17, wherein the signal checking unit checks whether the identified input signal is abnormal by sensing whether an input signal cable is connected.

26. The displaying device of claim 17, further comprising a data setting unit that sets the number of times the identified input signal is checked, wherein if the signal checking unit has not checked the number of set times, the signal checking unit continues the checking.

27. The displaying device of claim 17, further comprising a data setting unit that sets the time required to check the identified input signal, wherein if the signal checking unit has not checked the identified input signal for the set period of time, the signal checking unit continues checking whether the identified input signal is abnormal.

28. The displaying device of claim 17, further comprising a data setting unit that sets the position of the identified input signal to be checked within a sequence of identified input signals to be checked.

29. The displaying device of claim 28, further comprising a signal controlling unit that checks the position of the checked input signal within the sequence of identified input signals to be checked to determine which identified input signal is to be checked after the checked input signal,
wherein the signal changing unit switches from the checked input signal to the determined input signal so that the signal checking unit can check whether the determined input signal is abnormal.

30. The displaying device of claim 17, further comprising a menu from which a user determines the identified input signal is to be checked and a checking order.

31. A method of checking a signal input into a displaying device, the method comprising:
receiving an input signal and identifying the type of received input signal;
checking whether the received and identified input signal is abnormal; and
switching from the checked input signal to a next received and identified input signal to check whether the next received and identified input signal is abnormal.

32. The method of claim 31, wherein the identifying comprises identifying whether the input signal is a D-sub analog signal.

33. The method of claim 31, wherein the identifying comprises identifying whether the input signal is a DVI analog signal.

34. The method of claim 31, wherein the identifying comprises identifying whether the input signal is a DVI digital signal.

35. The method of claim 31, wherein the identifying comprises identifying whether the input signal is a VIDEO signal.

36. The method of claim 31, wherein the checking comprises checking whether a cable carrying the received and identified signal is connected to the displaying device.

37. The method of claim 31, wherein the checking comprises checking whether H-sync and V-sync patterns associated with the received and identified signal are abnormal.

38. The method of claim 31, wherein the checking comprises decoding the input signal.

39. The method of claim 31, wherein the checking comprises sensing whether a signal input cable is connected.

40. The method of claim 31, wherein the checking comprises setting the number of times the input signal is checked, wherein if the checking whether the input signal is abnormal has not been performed the number of set times, the checking whether the input signal is abnormal continues.

41. The method of claim 31, wherein the checking comprises setting the time required to check the input signal, wherein if the checking whether the input signal is abnormal has not been performed for the period of set time, the checking whether the input signal is abnormal continues.

42. The method of claim 31, wherein the checking comprises checking the position of the input signal to be checked within a sequence of input signals to be checked.

43. The method of claim 42, wherein the checking further comprises checking the position of the checked input signal within the sequence of input signals to be checked to determine which input signal is to be checked after the checked input signal,
wherein the checked input signal is switched to the determined input signal so that whether the determined input signal is abnormal can be checked.

44. The method of claim 31, wherein the checking comprises determining from a menu the received and identified input signal to be checked and an order of checking.
